# EUROPÄISCHE PATENTSCHRIFT

(11) **EP 3 817 887 B1**
(45) Veröffentlichungstag und Bekanntmachung des Hinweises auf die Patenterteilung: **16.04.2025**
(21) Anmeldenummer: 20722295.1
(22) Anmeldetag: 27.04.2020
(51) Int. Cl.: B23K 26/70, B23K 26/60, B23K 26/348, B23K 26/24, B23K 103/04

(54) **VERFAHREN ZUM UNLÖSBAREN FÜGEN VON MINDESTENS ZWEI BAUTEILEN AUS STAHL**
METHOD FOR UNDISMOUNTABLE JOINING AT LEAST TWO STEEL COMPONENTS
PROCÉDÉ D'ASSEMBLAGE INDÉMONTABLE D'AU MOINS DEUX COMPOSANTS EN ACIER

(30) Priorität: 22.05.2019 DE 102019113697
(43) Veröffentlichungstag der Anmeldung: 12.05.2021
(73) Patentinhaber: Stahlkontor GmbH + Co. KG, 58135 Hagen (DE)
(72) Erfinder: LITSCHMANN, Roman, 44227 Dortmund (DE); DRAWE, Heiko, 58256 Ennepetal (DE)
(74) Vertreter: Greif, Thomas
(86) Internationale Anmeldenummer: PCT/EP2020/061582
(87) Internationale Veröffentlichungsnummer: WO 2020/233945

(56) Entgegenhaltungen:
- WO-A1-2017/102004
- DE-A1- 102017 115 866

## Beschreibung

Die Erfindung betrifft ein Schweißverfahren wie z.B. Laserstrahl-MSG-Hybrid zum unlösbaren fügen zweier oder mehreren Bauteilen aus hochfesten Stahl unter induktiver Hochtemperatur-Wärmebehandlung der Bereiche um die Fügestelle herum, gemäß den Merkmalen des Oberbegriffes des Patentanspruches 1 (siehe z.B. DE 10 2017 115866 A1).

Zum unlösbaren Fügen zweier Bauteile aus hochfestem Stahl werden in der Regel Laserstrahl-Schweißverfahren, Metall-Schutzgas-Schweißverfahren (MSG-Schweißverfahren) oder eine Kombination dieser Verfahren, wie das Laserstrahl-MSG-Hybrid-Schweißverfahren eingesetzt. Diese Verfahren sind dem Fachmann hinlänglich bekannt.

Bei hochfesten Stählen wie z. B. Feinkornstählen stellt sich bei diesen Verfahren allerdings eine rasche Abkühlung der Fügestelle und der benachbarten Bereiche (im Folgenden "Wärme beeinflusste Zone" (WEZ)) ein. Hierdurch können sich sehr harte Gefügebestandteile bilden, wodurch das Material der beiden zu fügenden Bauteilen in diesem Bereich spröde wird. Diese Aufhärtung in der WEZ ist umso höher, je schneller dieser Bereich direkt neben der Fügestelle abkühlt. Die auf diese Weise generierten, aufgehärteten und spröden Fügebereiche weisen schlechtere mechanischtechnologische Eigenschaften wie der eingesetzte hochfeste Stahl auf und neigen unter extremer Beanspruchung zu Rissbildung.

Zur Vermeidung einer solchen unerwünschten Nachhärtung ist es bekannt, den Temperaturgradienten der WEZ zu den unbehandelten Bereichen der zu fügenden Teile zu minimieren bzw. die Abkühlung langsamer zu gestalten. So ist aus Lahdo, Rabi (et al.): Laserstrahl-MSG-Hybridschweißen von Feinkornbaustählen für den Einsatz im Stahlbau (in Stahlbau, Band 84, 2015, H.12, Seiten 1016 bis 1022 ISSN 0038-9145) ein Laserstrahl-MSG-Hybridschweißverfahren zum Fügen von hochfesten Stahl bekannt, bei dem der Bereich um eine Fügestelle herum induktiv auf eine Temperatur von 190 Grad Celsius erwärmt wird.

Ähnlich beschreiben Bach, Fr.-W. et al. in "Verbessertes Umformverhalten durch serielle induktive Nachwärmung von Laserstrahlschweißnähten" in: Materialwissenschaft und Werkstofftechnik, Band 33, 2002, H.7, Seiten 410 bis 414, ISSN 0049-8688) und Kügler et al. in "Laser-MSG Hybridschweißen von Stehlfeinblechen, 31.12.2015" jeweils Laserstrahlschweißverfahren mit induktiver Nachwärmung der Schweißnähte für Leichtbauteile bei Kraftfahrzeugen.

Weiterhin beschreibt WO201803331 0A1 ein Laserstrahl-MSG Hybrid-Schweißverfahren von hochfesten Stahlbauteilen mit einer induktiven Wärmebehandlung.

Diese Publikationen schlagen eine Wärmebehandlung bei maximal 300°C vor, was mit einer einerseits schnellen und kostengünstigen Aufwärmung und andererseits mit der Vermeidung rissanfälliger Bereiche durch Bildung von sehr harten Gefügebestandteile unter hohen Temperaturen begründet wird. Außerdem ist von den Herstellern der Stähle immer wieder als Obergrenze für die Erwärmung eine Temperatur von 200⁰ C angegeben, die unbedingt einzuhalten ist, um nach bisherigem Kenntnisstand eine Schwächung der Fügestelle insbesondere durch eine nach dem Schweißen durchgeführte Erwärmung zu vermeiden.

Nachteilig an diesen Verfahren ist das enge Temperaturfenster der Wärmebehandlung, was in Anbetracht der an sich hohen Schweißtemperaturen eine sorgfältige Prozesskontrolle erfordert. Dies ist insbesondere bei dünnen Bauteilen und/oder hohen Anforderungen an die mechanische Belastbarkeit schwierig.

Aufgabe der vorliegenden Erfindung war es daher, einen einfacher zu kontrollierenden Prozess zum Schweißen von Bauteilen aus hochfestem Stahl unter Wärmebehandlung zu etablieren.

Überraschenderweise wurde gefunden, das die Wärmebehandlung eines solchen Schweißverfahrens auch bei deutlich höheren Temperaturen als 300°C durchgeführt werden kann, ohne das rissanfällige Bereiche bzw. Bereiche mit unerwünscht harten Gefügebestandteile entstehen.

Ein Verfahren zum unlösbaren Fügen von mindestens zwei Bauteilen aus Stahl mit einer Streckgrenze von mindestens 1000 MPa und eine Härte von mindestens 420 HBW durch Schweißen unter Ausbildung mindestens einer Fügestelle entsprechend der Erfindung ist im Anspruch 1 definiert, wobei der Bereich um die Fügestelle herum auf 300°C bis 750°C induktiv aufgewärmt , wobei die induktive Erwärmung nach der Durchführung des Schweißverfahrens erfolgt, wobei der induktiv aufgewärmte Bereich für mindestens 5 Sekunden eine Temperatur von mindestens 400°C aufweist.

Stähle mit einer Streckgrenze von mindestens 1000 MPa und eine Härte von mindestens 420 HBW werden im Folgenden auch als "hochfester Stahl" bezeichnet. Bevorzugt wird das erfindungsgemäße Fügen durch das Laserstrahl-MSG-Hybrid-Schweißverfahren durchgeführt.

Mit dem erfindungsgemäßen Verfahren können (müssen aber nicht) die Bereiche um die Fügestelle, insbesondere um die Fügenaht, herum so vorerwärmt, dass sich der Bereich der Fügestelle nach erfolgter Durchführung des Schweißverfahrens nicht zu schnell abkühlt. Dadurch wird die Bildung aufgehärteter, spröder und damit rissanfälliger Bereiche wirksam vermieden.

Die induktive Aufwärmung kann in einem engen Bereich um die Fügestelle herum durchgeführt werden. Grundsätzlich könnten die zu fügenden Bauteile in ihrer Gesamtheit erwärmt werden, z.B. bei komplexen Geometrien der Komponenten, insbesondere der Fügenähte notwendig sein kann. Bevorzugt ist allerdings ein Bereich der induktiven Erwärmung mit einer Ausdehnung (Breite) von 5 bis 25 mm um die Fügestelle/Fügenaht. Besonders bevorzugt ist ein Bereich von 5 mm bis 15 mm um die Fügestelle/Fügenaht. Je schmaler dieser Bereich ist, desto besser wird das Gefüge nach dem Fügen, da die Fügenaht (der Fügebereich) das Ausgangsmaterial grundsätzlich schwächt. Je schmaler also der Fügebereich ist, desto weniger wird das Ausgangsmaterial durch den abgeschlossenen Füge- und Erwärmprozess geschwächt.

Dabei ist darauf zu achten, dass die Erwärmung nicht mit Temperaturen erfolgt, die einen Einfluss auf eine Gefügeänderung der hochfesten Feinkornbaustähle haben. Die Erwärmung ist dabei nicht nur abhängig von dem verwendeten hochfesten Stahl, sondern auch von der geometrischen Erstreckung (Fläche) der zu fügenden Bauteile und deren Materialstärke (Dicke).

Entsprechend der Erfindung wird die induktive Erwärmung in einem Bereich von 400°C bis 750°C oder weiter insbesondere von 450°C bis 750°C durchgeführt. Zur Vermeidung von aufgehärteten oder spröden und damit rissanfälligen Bereichen ist entsprechend der Erfindung, dass der induktiv aufgewärmte Bereich für mindestens 5 Sekunden eine Temperatur von mindestens 400°C aufweist.

Aufwärmung bedeutet in diesem Zusammenhang, dass die beiden Bauteile unlösbar gefügt werden (durch ein geeignetes, vorstehend genanntes Schweißverfahren). Nach erfolgtem Schweißvorgang wird eine Abkühlung durchgeführt. Diese erfolgt bis auf in etwa Raumtemperatur (abhängig von den Umgebungsbedingungen, beispielsweise im Bereich von 10⁰ C bis 30⁰ C) und kann passiv (durch einfaches Abwarten) oder aktiv (durch Zufuhr geeigneter Kühlmittel, wie zum Beispiel Luft) durchgeführt werden. Anschließend erfolgt entsprechend der Erfindung die beschriebene Aufwärmung, die auch als Nacherwärmung bezeichnet werden kann.

Es hat sich herausgestellt, dass zur Erzielung der gewünschten Eigenschaften der späteren fertigen Schweissbaugruppen, die aus den zumindest zwei unlösbar gefügten Bauteilen besteht, der hochfeste Stahl, aus dem die Bauteile bestehen, eine Streckgrenze von mindestens 1000 MPa und eine Härte von mindestens 420 HBW aufweisen. Das heißt, dass nach der Erfindung hochfeste Stähle mit einer Streckgrenze von mindestens 1000 MPa und einer Härte von mindestens 420 HBW verwendet werden.

In Weiterbildung der Erfindung erfolgt die Erwärmung gezielt nach der Durchführung des Schweißverfahrens. In diesem Fall wird sichergestellt, dass die zu fügenden Komponenten eine solche Energie aufweisen, mit der der langsame Abkühleffekt nach Durchführung des Schweißens erreicht wird. Von besonderem Vorteil und in der Praxis besonderer Wichtigkeit ist die Erwärmung auf den vorgegebenen Temperaturbereich nur nach der Durchführung des Schweißprozesses, um zu vermeiden, dass der hochfeste Stahl nach Beendigung des Schweißprozesses in der Wärme beeinflussten Zone zur Bildung sehr harter Gefügebestandteile neigt

In Weiterbildung der Erfindung wird das Schweißverfahren mit einer definierten Geschwindigkeit in Abhängigkeit von der Materialstärke (Dicke) der zu fügenden Bauteile durchgeführt. Hierdurch ist es nicht nur in vorteilhafter Weise möglich, sehr schnell und somit mit einer deutlich höheren Schweißgeschwindigkeit gegenüber dem konventionellen Schweißen entlang einer Fügenaht zu schweißen, sondern durch die induktive Aufwärmung auch die geforderten mechanisch-technologischen Eigenschaften der gefügten Bauteile zu erzielen, die optimal auf die Materialstärke abgestimmt sind. Es werden also in vorteilhafter Weise zwei Ziele verfolgt und umgesetzt: hohe Schweißgeschwindigkeit und hohe Belastbarkeit unter extremen Beanspruchungen gegenüber teilmechanisierten und/oder vollmechanisierten MAG-Schweißprozessen.

Zur induktiven Erwärmung wird bevorzugt eine Induktionsspule eingesetzt, die wiederum vorzugsweise mit der gleichen Geschwindigkeit des Laserstrahles vor und/oder hinter dem Laserstrahl bewegt wird. Hiermit lässt sich also in vorteilhafter Weise die Einrichtung zum Laserstrahl-MSG-Hybrid-Schweißverfahren mit der Einrichtung zum Aufwärmen (allgemein Induktionsspule) miteinander kombinieren. Dass bedeutet, dass der zu erwärmende Bereich der Schweißeinrichtung voreilt und/oder nacheilt, so dass dadurch immer die erforderliche Erwärmung zur Vermeidung der zu schnellen Abkühlung nach Durchführung des Schweißverfahrens erfolgt. Auf einfache Art und Weise können somit die Einrichtungen zum Schweißen und zum Erwärmen miteinander gekoppelt werden.

Die Aufwärmung der Fügestelle hat darüber hinaus noch den Vorteil, dass vor allen Dingen längere Schweißnähte ausgeführt werden können. Bisher war es mit den bekannten Schweißverfahren nicht möglich, längere Schweißnähte, die sich insbesondere über die Gesamtlänge der zufügenden Komponenten erstrecken, in einem Durchgang zu schweißen. Es musste immer abschnittsweise (z. B. Pilgerschrittverfahren) geschweißt werden, um einen unerwünschten Verzug der Bauteile zu minimieren. Die Vorteile liegen zusammenfassend somit in der optimalen Einstellung der mechanisch-technologischen Eigenschaften des Fügebereichs, der betriebswirtschaftlichen Betrachtung in Hinsicht der höheren Schweißgeschwindigkeit und des nahezu verzugsfreien Schweißens überformatiger Bauteile.

Von ganz besonderem Vorteil ist die Anwendung des vorstehend beschriebenen Laserstrahl-MSG-Hybrid-Schweißverfahrens mit induktiver Wärmeführung für einen wehrtechnischen Einsatz, da hierbei Komponenten aus einem hochfesten Sicherheitsstahl zur Anwendung kommen und im Einsatz allerhöchsten Beanspruchungen, insbesondere durch Beschuss bzw. Explosion, unterliegen. Die zu fügenden Bauteile finden Anwendung bei stationären oder mobilen Einrichtungen, wie beispielsweise Panzerfahrzeugen oder dergleichen.

Als Beispiele von Gruppen von hochfesten Stählen (ohne Einschränkung) für den wehrtechnischen Einsatz sind Baugruppen mit Werkstoffeigenschaften bis hin zur Güte Z nach TL 2350-0000 zu nennen, genauso wie solche nach den Normen: CEN ISO/TR 15608, Tab. 1, Gruppe 3.

Eine Auswahl der anzuwendenden hochfesten Stähle ist darin zu sehen, dass der hochfeste Stahl eines jeden Bauteiles eine Streckgrenze in einem Bereich von mindestens 1000 MPa bis maximal 1750 MPa und eine Härte in einem Bereich von mindestens 475 HBW bis maximal 550 HBW aufweist. Aufgrund des Einsatzes der hochfesten Stähle mit diesen Materialeigenschaften lässt sich das induktive Aufwärmen vor und/oder nach dem Fügen optimal auf die Bauteile abstimmen, die gefügt werden sollen. Durch den Einsatz der Stähle mit den genannten Materialeigenschaften (Streckgrenze und Härte) lassen sich Schweissbaugruppen mit solchen gefügten Bauteilen realisieren, die besonders hohen Anforderungen genügen.

Alternativ dazu kann eine Schweissbaugruppe (allgemein Vorrichtung) aus hochfesten Stählen nach der Erfindung gebildet werden, wenn der hochfeste Stahl eine Streckgrenze in einem Bereich von mindestens 1100 MPa bis maximal 1650 MPa und eine Härte in einem Bereich von mindestens 420 HBW bis maximal 530 HBW aufweist. Ebenfalls zur Erzielung der erforderlichen Stabilitäten von Vorrichtungen bei Beschuss oder dem Aussetzen von Explosionen steht somit ein alternatives Material zur Verfügung, welches zur Bildung der Vorrichtung eingesetzt werden kann.

Bevorzugt weist mindestens ein zu fügendes Bauteil eine Materialstärke von mindestens 1 Millimeter, vorzugsweise mindestens 3 Millimeter, auf. In Weiterbildung der Erfindung ist vorgesehen, dass die zu fügenden Bauteile eine Materialstärke von mindestens 3 Millimetern (drei Millimeter, 3 mm) aufweisen. Durch diese mindestMaterialstärke ist gewährleistet, dass Vorrichtungen, wie zum Beispiel Fahrzeugkomponenten für die zivile oder militärische Anwendung, ausreichend stark dimensioniert sind, wenn solche Vorrichtungen, wie zum Beispiel Fahrzeuge, unter Beschuss geraten oder Explosionen ausgesetzt sind. Die nach der Erfindung vorgesehenen Materialeigenschaften der hochfesten Stähle aus denen die Bauteile bestehen, deren unlösbare Zusammenfügung und die Mindestmaterialstärke führen insgesamt zu einem vorteilhaften Gesamtschutz der Vorrichtung, die auch höchsten Sicherheitsanforderungen genügt.

Die Streckgrenze Rₑ ist ein Werkstoffkennwert und bezeichnet diejenige Spannung, bis zu der ein Werkstoff bei einachsiger und momentenfreier Zugbeanspruchung keine dauerhafte plastische Verformung zeigt. Es handelt sich dabei um eine Fließgrenze. Bei Unterschreiten des Wertes kehrt das Material nach Entlastung elastisch in seine ursprüngliche Form zurück, bei Überschreiten verbleibt dagegen eine Formveränderung, bei einer Probe also eine Verlängerung. Je nach Materialverhalten wird entweder die Streckgrenze oder die Dehngrenze verwendet, um die Elastizitätsgrenze eines Materials festzulegen. Die Streckgrenze ist mittels etablierter und standardisierter Zugversuche einfach zu ermitteln und hat die größte technische Bedeutung. Sie wird in den Einheiten "MPa" (Megapascal) oder "N/mm²" (Newton pro Quadratmillimeter) angegeben.

Härte ist der mechanische Widerstand, den ein Werkstoff der mechanischen Eindringung eines anderen Körpers entgegensetzt. Je nach der Art der Einwirkung unterscheidet man verschiedene Arten von Härte. So ist Härte nicht nur der Widerstand gegen härtere Körper, sondern auch gegen weichere und gleich harte Körper. Sie wird in der Einheit "HB" (Brinellhärte) beziehungsweise "HBW" (Brinellhärte, W steht für das Material der Prüfkugel: Wolframkarbidhartmetall) angegeben und nach etablierten standardisierten Messverfahren bestimmt.

Bei der Umrechnung von Härteangaben in der Einheit "HB" beziehungsweise "HBW" in die Einheit "HV" (Härte nach Vickers) oder umgekehrt stehen seit langem entsprechende Umrechnungstabellen zur Verfügung.

### Beispiele

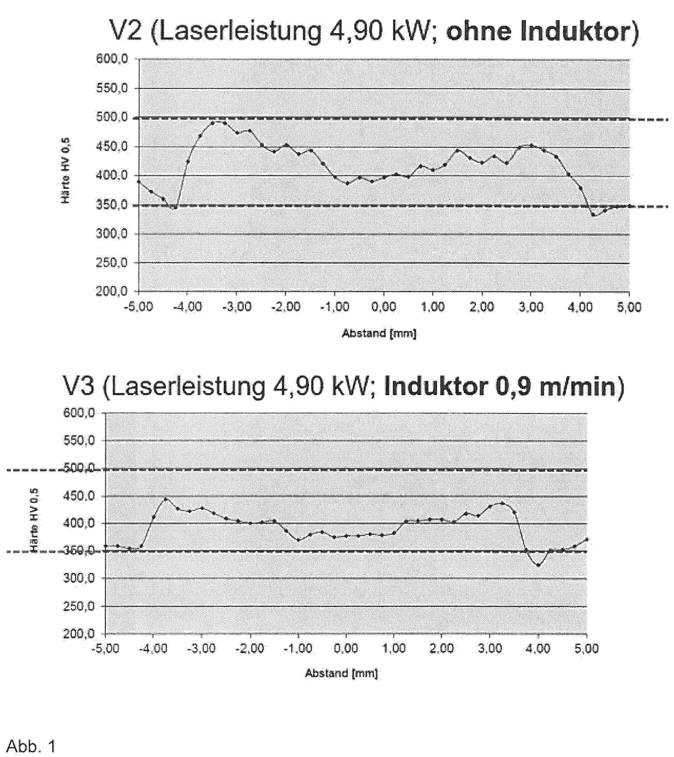

Es wurden jeweils hochfeste Stähle mit Laserstrahl-MSG-Hybrid-Schweißen gefügt, wobei einmal ohne (Versuch V2) und einmal mit (Versuch V3) erfindungsgemäßer induktiver Nacherwärmung mit einer Vorschubgeschwindigkeit von 0,9 m/min (Meter pro Minute) gearbeitet wurde. Abb. 1 zeigt einen Vergleich der Materialhärten in Abhängigkeit vom Abstand von der Fügestelle.

Es zeigt sich, dass durch die erfindungsgemäße Erwärmung eine deutliche Reduzierung der Härte in Schweißgut und WEZ mit Einebnung der Härtespitzen erreicht werden kann. Zudem erfolgt eine lokale Gefügehomogenisierung, wobei im Zugversuch keine Beeinflussung von der Streckgrenze Rₑ und nur ein leichtes Absenken von Rm und eine leichte Erhöhung der Bruchdehnung festgestellt wird. Im Kerbschlagbiegeversuch zeigt sich keine Beeinflussung durch die Wärmenachbehandlung.

## Patentansprüche

1. Verfahren zum unlösbaren Fügen von mindestens zwei Bauteilen aus Stahl mit einer Streckgrenze von mindestens 1000 MPa und eine Härte von mindestens 420 HBW durch Schweißen unter Ausbildung mindestens einer Fügestelle, wobei der Bereich um die Fügestelle herum induktiv aufgewärmt wird **dadurch gekennzeichnet, dass** die induktive Erwärmung nach der Durchführung des Schweißverfahrens erfolgt, wobei der induktiv aufgewärmte Bereich für mindestens 5 Sekunden eine Temperatur von mindestens 400°C bis 750°C aufweist.

2. Verfahren nach Anspruch 1, **dadurch gekennzeichnet, dass** das Fügen durch Laserstrahl-MSG-Hybrid-Schweißen durchgeführt wird.

3. Verfahren nach Anspruch 1 oder 2, **dadurch gekennzeichnet, dass** ein Bereich von 0 bis 25 mm um die Fügestelle herum induktiv aufgewärmt wird.

4. Verfahren nach einen der Ansprüche 1 bis 3, + **dadurch gekennzeichnet, dass** für die induktive Erwärmung eine Induktionsspule eingesetzt wird.

5. Verfahren nach einen der Ansprüche 1 bis 4, **dadurch gekennzeichnet, dass** mindestens ein zu fügendes Bauteil eine Materialstärke von mindestens 1 Millimeter aufweist.

## Claims

1. Method of inextricably joining at least two steel components having a yield strength of at least 1000 MPa and a hardness of at least 420 HBW by welding to form of at least one join site, with inductive heating of the area around the join site, **characterized in that** the inductive heating follows after the welding process, where the inductively heated area has a temperature of at least 400°C to 750°C for at least 5 seconds.

2. Method according to Claim 1, **characterized in that** the joining is performed by laser beam MSG hybrid welding.

3. Method according to Claim 1 or 2, **characterized in that** an area of 0 to 25 mm around the join site is heated inductively.

4. Method according to any of Claims 1 to 3, **characterized in that** an induction coil is used for the inductive heating.

5. Method according to any of Claims 1 to 4, **characterized in that** at least one component to be joined has a material thickness of at least 1 millimetre.

## Revendications

1. Procédé d'assemblage indissociable d'au moins deux composants en acier ayant une limite d'élasticité d'au moins 1000 MPa et une dureté d'au moins 420 HBW par soudage en réalisant au moins un point d'assemblage, la zone autour du point d'assemblage étant chauffée par induction, **caractérisé en ce que** le chauffage par induction a lieu après l'exécution du procédé de soudage, la zone chauffée par induction présentant pendant au moins 5 secondes une température d'au moins 400 °C à 750 °C.

2. Procédé selon la revendication 1, **caractérisé en ce que** l'assemblage est exécuté par soudage hybride à faisceau laser-LMSG.

3. Procédé selon la revendication 1 ou 2, **caractérisé en ce qu'**une zone de 0 à 25 mm autour du point d'assemblage est chauffée par induction.

4. Procédé selon l'une quelconque des revendications 1 à 3, **caractérisé en ce que** l'on utilise une bobine d'induction pour le chauffage par induction.

5. Procédé selon l'une quelconque des revendications 1 à 4, **caractérisé en ce qu'**au moins un composant à assembler présente une épaisseur de matériau d'au moins 1 millimètre.
